## Europäisches Patentamt

## European Patent Office

## Office européen des brevets

(19)

(11) Veröffentlichungsnummer: **0 093 085**
**B1**

(12) **EUROPÄISCHE PATENTSCHRIFT**

(45) Veröffentlichungstag der Patentschrift:
02.07.86

(21) Anmeldenummer: 83810167.3

(22) Anmeldetag: 21.04.83

(51) Int. Cl.⁴: **C 09 J 3/00,** C 09 J 3/14,
C 08 L 33/00

(54) Verfahren zur Herstellung eines lagerfähigen, mischbaren Härters für Acrylatklebharze.

(30) Priorität: 27.04.82 CH 2566/82
27.12.82 CH 7561/82

(43) Veröffentlichungstag der Anmeldung:
02.11.83 Patentblatt 83/44

(45) Bekanntmachung des Hinweises auf die Patenterteilung:
02.07.86 Patentblatt 86/27

(84) Benannte Vertragsstaaten:
AT CH DE FR GB IT LI NL SE

(56) Entgegenhaltungen:
EP-A-0 025 015
EP-A-0 044 166

(73) Patentinhaber: CIBA- GEIGY AG, Klybeckstrasse 141, CH- 4002 Basel (CH)

(72) Erfinder: Forgò, Imre, Dr., Am Stausee 27/16, CH- 4127 Birsfelden (CH)
Erfinder: François, Jacques, 4, Rue de l'Abattoir, F-68330 Huningue (FR)

EP 0 093 085 B1

0 093 085

**Beschreibung**

Die Erfindung betrifft ein Verfahren zur Herstellung eines lagerfähigen, mit Acrylatharz mischbaren Härters für Acrylatklebstoffe, die nach diesem Verfahren erhaltenen Härter und deren Verwendung in Mischungen mit Acrylatklebharzen.

Die reaktiven Acrylatklebstoffe sind zweikomponentige, bei Raumtemperatur härtbare Klebsysteme, die aus Harz, das eine freie Radikale bildende Verbindung enthält, und Härter bestehen. Bei der Verwendung dieser Klebstoffe trägt man in der Regel das Harz und den Härter getrennt auf die zusammenzufügenden Teile auf, fügt nachher die so beschichteten Teile zusammen und lässt diese Klebung aushärten. Diese einfache Arbeitsweise bietet einerseits viele technische Vorteile. Anderseits können unkontrollierbare Schwankungen bei den Festigkeitswerten der Verklebungen auftreten. Diese Schwankungen werden dadurch verursacht, dass der Härtungsvorgang nach dem Zusammenführen von Harz und Härter von der Diffusion des Härters durch die Harzschicht abhängig ist.

Es wurde schon früher festgestellt, dass sich die reaktiven Acrylatklebharze mit dem für getrennte Anwendungen am meisten verwendeten Härter (Amin/Aldehyd-Addukt aus Anilin und Butyraldehyd) auch gemischt aushärten lassen. Das für eine brauchbare Verklebung erforderliche Mengenverhältnis von Harz und Härter liegt bei etwa 100:5. Dieses Verhältnis ist jedoch für eine maschinelle Dosierung schwer einstellbar. Ausserdem sind die Viskositäten von Harz und Härter stark unterschiedlich (8-40 Pa.s für das Harz und 200 mPa.s für den Härter); dies erschwert homogenes Mischen des dünnflüssigen Härters im zähen Harz. Im Falle von manuellem Auftrag der Klebstoffkomponenten müssen diese wegen der stark unterschiedlichen Mengen gewogen werden, was für üblichen Gebrauch zu aufwendig ist. Eine weitere Komplikation entsteht bei der getrennten Anwendung der Komponenten dadurch, dass alle Harz- und Härterteile, die miteinander nicht in Berührung kommen, aufgrund von fehlendem Reaktionspartner unausgehärtet bleiben und vom verklebten Produkt noch entfernt werden müssen.

In der US Patentschrift 4 340 532 werden Acrylatklebharze und Härter dafür beschrieben, die in einem Verhältnis von 1:1 gemischt werden. Diese Mischungen sind für die Verwendung in der zahnärztlichen Praxis entwickelt worden und weisen für industrielle Anwendungen den Nachteil auf, dass es sich bei der einen Komponente um eine Flüssigkeit und bei der anderen um ein Pulver handelt. Die Mischungsschwierigkeiten treten auch hier auf.

Zwar sind Härter auf dem Markt, welche Vinylmonomere, Amin/Aldehyd-Kondensate, Stabilisatoren und Polymere enthalten. Ihre Lagerfähigkeit ist aber wegen des Anstiegs ihrer Viskosität in relativ kurzer Zeit für viele Fälle ungenügend.

Es wurde nun gefunden, dass nach dem erfindungsgemässen Verfahren hergestellte Härter viskositätsstabil sind und zudem reaktiv, also polymerisationsfähig, bleiben.

Das erfindungsgemässe Verfahren ist dadurch gekennzeichnet, dass man ein gegebenenfalls mit einem Stabilisator versehenes, olefinische Gruppen aufweisendes polymerisierbares Monomer, ausgewählt aus der Gruppe bestehend aus Acrylaten, Methacrylaten, Styrol, Chlorstyrol, 2-Chlor-1,3-Sutadien oder 2,3-Dichlor-1,3-Sutadien, bei einer Temperatur von 50-100°C mit einem darin löslichen Thermoplast oder Elastomer, ausgewählt aus der Gruppe bestehend aus Polyacetal, Polyacrylat, Polymethacrylat, Polystyrol, Polyamid, Polyvinylchlorid oder einem Copolymer aus Styrol und Acrylat bzw. Methacrylat, aus Styrol und Butadien oder aus Styrol und Isopren, einem Terpolymer aus Styrol, Butadien und aus Acryl nitril, oder bestehend aus Polyacethan, Butylkautschuk oder Butadien-Acrylnitril Copolymer, versetzt, der so gebildeten verdickten Lösung ein flüssiges Aldehyd/ Amin-Kondensationsprodukt zugibt und die Lösung bei erhöhter Temperatur homogenisiert. Vorzugsweise kühlt man die verdickte Lösung vor der Zugabe des Aldehyd/Amin-Kondensationsproduktes ab.

Vorzugsweise erfolgt die Homogenisierung bei einer Temperatur zwischen 60 und 100°C.

Als polymerisierbare Monomere kommen insbesondere Methyl-, Aethyl- oder Butylmethacrylate und Methacryl-2-äthoxyäthylester in Frage.

Als flüssige Aldehyd/Amin-Kondensationsprodukte sind solche aus Formaldehyd, Acetaldehyd, Propionaldehyd, Hexaldehyd, Heptaldehyd oder Crotonaldehyd mit einem primären oder sekundären, aliphatischen oder aromatischen Amin, z.B. Aethylamin, n-Butylamin, n- und iso-Propylamin, n-Hexylamin, t-Butylamin, p-Toluidin, Xylidin, Benzylamin, ferner Diäthylamin und Diphenylamin verwendbar. Vorzugsweise verwendet man ein Umsetzungsprodukt aus Anilin und Butyraldehyd, wobei man auf 1 Mol 1 bis 3,5 Mol, insbesondere 1,5 bis 3,0 Mol, Butyraldehyd einsetzt.

Als Stabilisatoren werden bevorzugt chinonartige Verbindungen, vor allem Chinon selber, in Mengen von 0,005 bis 0,5 Gew.%, bezogen auf den Härter, verwendet. Ob ein Stabilisator eingesetzt werden muss oder nicht, hängt von der Reaktivität der monomeren Verbindungen ab. Beispielsweise wird bei Verwendung von Butylacrylat kein Stabilisator benötigt (natürlich kann er trotzdem anwesend sein), hingegen ist er erforderlich z.B. bei der Verwendung von Methylmethacrylat.

Als Thermoplast verwendet man vorzugsweise ein Folyacetal, Polyacrylat, Polymethacrylat, Polystyrol, Polyamid oder ein Copolymer aus Styrol und Acrylat bzw. Methacrylat, aus Styrol und Butadien oder aus Styrol und Isopren oder ein Terpolymer aus Styrol, Butadien und Acrylnitril, und zwar in einer Menge von 5 bis 85 Gew.%, bezogen auf den Härter, insbesondere 5 bis 35 Gew.%.

Bevorzugte Elastomere sind Polyurethan, Butylkautschuk oder Butadien/ Acrylnitril-Copolymer, ebenfalls in einer Menge von 5 bis 85 Gew.%, bezogen auf den Härter, insbesondere 5-35 Gew.%.

Die Menge des Thermoplasts oder Elastomers im Härter richtet sich nach der gewünschten Viskosität des

2

Härters. Diese wird zweckmässig der Viskosität des Acrylklebharzes angepasst, d.h. sie liegt zwischen etwa 4 bis 30 Pa.s.

Das erfindungsgemässe Verfahren kann auch unter Zusatz von beim Kleben als Beschleuniger des Härtungsvorganges wirkenden Verbindungen von Uebergangsmetallen durchgeführt werden. Dazu gehören Verbindungen, die das Metall in Form einer Chelatverbindung, beispielsweise mit einem β-Diketon oder Aethylen- oder Propylendiamin, oder in Form einer Verbindung einer organischen Säure oder eines Alkohols, wie z.B. Naphthenate (wie solche von Kobalt, Nickel, Mangan),Octoate (z.B. solche von Kupfer), Hexoate und Propionate (z.B. solche von Eisen) enthalten. Bevorzugte Materialien sind Acetylacetonate von Vanadin, Kupfer, Kobalt und Eisen. Beispielsweise seien Cu(II)-acetylacetonat, Cu-p-toluolsulfinat und Cu-naphthenat genannt. Sie werden in Mengen von 0,0005 bis 1,0 Gew.%, bezogen auf das Härtergewicht, zugefügt.

Ueberraschend ist, dass auch bei Zusatz solcher Beschleuniger die Härtermischungen sowohl viskositäts- als auch aktivitätsstabil bleiben, und zwar auch bei Anwesenheit eines Chinons als Stabilisator.

Acrylatklebharze können z.B. gemäss der US patentschrift 4 278 106 hergestellt werden.

**Herstellung des Acrylatklebharzes A:**

58 Gew.-Teile (T.) Methylmethacrylat, 10 T. Methacrylsäure, 1 T. Aethylenglykoldimethacrylat, 0,5 T. Chinon und 27 T. Acrylnitril/Butadien/ Styrol-Kopolymerisatpulver werden unter Stickstoff bei 50°C aufgelöst. Anschliessend gibt man bei Raumtemperatur 2 T. Chlorsulfophenylmaleinimid dazu und rührt die Mischung während 1 Stunde. Nachher fügt man hinzu und homogenisiert die Mischung. Die Brookfield-Viskosität (bestimmt mit der Spindel Nr. 4 bei 50 U/min) des Acrylatklebharzes A beträgt 8-12 Pa.s.

Bezogen auf die Gesamtmenge des Härters, enthält dieser vorzugsweise 10 bis 90 Gew.%, insbesondere 60 bis 80 Gew.%, des polymerisierbaren Monomeren, 5 bis 25 Gew.%, insbesondere 10 bis 18 Gew.%, des Aldehyd/ Amin-Kondensats, 5 bis 85 Gew.%, insbesondere 10 bis 20 Gew.%, des Thermoplasts oder des Elastomers und gegebenenfalls die angegebenen Mengen an Stabilisator und/oder Metallkomplex.

In den folgenden Beispielen bedeutet T. Gew.-Teil oder Gewichts-Teile.

**Beispiel 1: Herstellung eines langsamwirkenden, mit dem Klebharz im Mengenverhältnis von 1:1 mischbar Härters.**

In einem Planschliffkolben werden 64,7 T. Methylmethacrylat mit 0,3 T. Chinon unter Stickstoff bei Raumtemperatur gut vermischt. Nachher werden 20 T. Polyacetal zugegeben und die flüssige Mischung während 1 Stunde bei 80°C gerührt (das Polyacetal wurde aus Vinylalkohol und 34'000 und 38'000; die Viskosität einer 10%igen Lösung in 95%igem Aethanol beträgt im Oswald-Viskosimeter gemessen, 55 mPa.s). Nachher kühlt man die Lösung auf Raumtemperatur ab. Es werden 15 T. eines Butyraldehyd ("Vanax 808®") besteht, zugefügt. Die Lösung wird während 2 Stunden bei 80°C homogenisiert und dann abgekühlt. Dieser Härter kann mit dem Klebharz A in allen Mischungsverhältnissen gemischt werden (vorzugsweise jedoch bequem ohne Abwägung) im Verhältnis von 2:1 bis 1:2, je nach der gewünschten Härtungszeit. Die Brookfield-Viskosität des Härters beträgt zu Beginn 8 Pa.s, nach 7-tägiger Lagerung bei 60°C 10 Pa.s.

**Beispiel 2: Herstellung eines schnellwirkenden, mit dem Harz im Verhältnis 1:1 mischbaren Härters.**

Es wird nach dem Beispiel 1 gearbeitet, mit dem Unterschied, dass man zum Amin/Aldehyd-Kondensat 0,005 T. Kupferacetylacetat zugibt und nachher die Lösung erwärmt.

Die Brookfield-Viskosität beträgt zu Beginn 6 Pa.s, nach 7-tägiger Lagerung bei 60°C 7 Pa.s.

**Beispiel 3:** Man geht gleich vor wie in Beispiel 2 beschrieben, wobei man aber anstelle von Kupferacetylacetonat 0,005 T. Kupfer-paratoluolsulfinat einmischt. Die Brookfield-Viskosität beträgt zu Beginn 9 Pa.s und ist nach 7-tägiger Lagerung bei 60°C unverändert.

**Beispiel 4:** Man geht wie in Beispiel 1 beschrieben vor, wobei man aber anstelle von 20 T. Polyacetal ebenso viel eines Polyurethanelastomers verwendet (Brookfield-Viskosität des Polyurethans: 15%ige Lösung in Aethylmethylketon bei 23°C: 1,8-2 Pa.s). Die Brookfield-Viskosität beträgt zu Beginn 26 Pa.s und nach 7-tägiger Lagerung bei 60°C 22 Oa.s.

**Beispiel 5:** Man verfährt wie in Beispiel 4 beschrieben, gibt aber zum Amin-Aldehydkondensat 0,005 T. Kupferacetylacetonat zu. Die Brookfield-Viskosität beträgt zu Beginn 28 Pa.s und nach 7-tägiger Lagerung bei 60°C 20 Pa.s.

In der folgenden Tabelle I wird das Verhalten einer 1:1-Mischung von Acrylatklebharz A und den Härtern gemäss den Beispielen 1-5 angegeben. Die Härtung wird stets mit frischem Acrylatharz A durchgeführt. Als Substrat wird entfettetes Aluminiumblech verwendet. Die Härter werden für die Feststellung der Anfangshaftung frisch hergestellt gebraucht. Als Anfangshaftung gilt die Zeit, die vom Verkleben von zwei Blechen bis zum Zeitpunkt, in welchem die Bleche ohne auseinanderzufallen gerade aneinander haften, verstreicht. Bei der Bestimmung der Zugscherfestigkeit wird entweder frischer Härter für die Mischung mit dem Acrylatharz verwendet ("0-Wert") oder aber solcher, der während 7 Tagen bei 60°C gelagert worden ist (7 Tage/60°C). Die Messungen erfolgen 45 bzw. 80 Minuten und 24 Stunden nach der Mischung bei Raumtemperatur ("RT").

Tabelle I

| Härter | Anfangs-haftung | Zugscherfestigkeitswerte in $N/mm^2$ nach | | | |
|---|---|---|---|---|---|
| | | nach 45 Min. bei RT | | nach 24 h bei RT | |
| | | O-Wert | 7 Tage/60°C | O-Wert | 7 Tage/60°C |
| Beispiel 1 | 30 Min. | 1* | 5* | 20 | 22 |
| Beispiel 2 | 5 Min. | 16 | 15 | 19 | 20 |
| Beispiel 3 | 5 Min. | – | – | 16 | 22 |
| Beispiel 4 | 30 Min. | 3* | 6* | 24 | 25 |
| Beispiel 5 | 5 Min. | 12 | 20 | 22 | 25 |

* nach 60 Min. bei RT.

**Beispiele 6 bis 39:** In einem Planschliffkolben werden 64,7 Gewichtsteile (T.) Methylmethacrylat mit 0,3 T. Chinon unter Stickstoff bei Raumtemperatur gut vermischt. Nachher werden 20 T. eines Verdickungsmittels (vergl.Tabelle II) zugegeben. Nach der Auflösung gibt man 15 T. Amin-Aldehyd-Addukt und gegebenenfalls das Metallsalz zu und homogenisiert die Mischung während 2 Stunden bei 80°C. Es ist sehr wichtig, die Reihenfolge der Rohstoff-Zugabe einzuhalten: Chinon + Amin-Aldehyd-Kondensat bilden sonst einen in Methylmethacrylat unlöslichen Niederschlag.

In der Tabelle II ist die Viskosität der hergestellten Härter, gemessen nach Brookfield, angegeben, und zwar der Anfangswert und der Wert nach 7-tägiger Lagerung bei 60°C.

Tabelle II

| Beisp. | Verdickungsmittel (%) | Metallsalz (%) | Viskosität in mPa·s Anfangswert | nach 7 T/60°C |
|---|---|---|---|---|
| 6 | Polystyrol (30) | – | 1900 | 3000 |
| 7 | " | Cu-Ac.Ac.(0,005) | 1900 | 2900 |
| 8 | " | Co-Naph. (0,1) | 1900 | 2600 |
| 9 | " | V-Ac.Ac.(0,005) | 1900 | 3900 |
| 10 | SBA (30) | – | 860 | 1100 |
| 11 | " | Cu-Ac.Ac.(0,005 | 860 | 1200 |
| 12 | " | Co-Naph.(0,1) | 860 | 1300 |
| 13 | " | V-Ac.Ac.(0,005) | 860 | 1300 |
| 14 | Polyvinylbutyral ("Butvar'®,Monsanto) | – | 5900 | 11500 |
| 15 | " | Cu-Ac.Ac.(0,005) | 5900 | 11800 |
| 16 | " | Co-Naph.(0,1) | 5900 | 10900 |
| 17 | " | V-Ac.Ac.(0,005) | 5900 | 11600 |
| 18 | Polyurethan-Elastomer (16) | – | 8100 | 7700 |
| 19 | " | Cu-Ac.Ac.(0,005) | 8100 | 5200 |
| 20 | " | Co-Naph.(0,1) | 8100 | 2200 |
| 21 | " | V-Ac.Ac.(0,005) | 8100 | 6100 |
| 22 | Acrylester-Polymer (30) | – | 80 | 240 |
| 23 | " | Cu-Ac.Ac.(0,005) | 80 | 350 |
| 24 | " | Co-Naph.(0,1) | 80 | 160 |
| 25 | " | V-Ac.Ac.(0,005) | 80 | 400 |
| 26 | PVC (Hochpolymer) | – | Paste | Paste |

Tabelle II (Fortsetzung)

| Beisp. | Verdickungsmittel (%) | Metallsalz (%) | Viskosität in mPa.s Anfangswert | nach 7 T/60°C |
|---|---|---|---|---|
| 27 | PVC (Hochpolymer) | Cu-Ac.Ac.(0,005) | Paste | Paste |
| 28 | " | Co-Naph.(0,1) | " | " |
| 29 | " | V-Ac.Ac(0,005) | " | " |
| 30 | Acrylnitril-Butadien-Copolymer (65) | – | 6400 | 10200 |
| 31 | " | Cu-Ac.Ac.(0,005) | 6400 | 16600 |
| 32 | " | Co-Naph.(0,1) | 5400 | 10800 |
| 33 | " | V-Ac.Ac.(0,005) | 6400 | 11700 |
| 34 | SBS (20) | – | 3400 | 6700 |
| 35 | " | Cu-Ac.Ac.(0,005) | 3400 | 6900 |
| 36 | " | Co-Naph.(0,1) | 3400 | 6500 |
| 37 | " | V-Ac.Ac.(0,005) | 3400 | 7600 |
| 38 | ABS (23) | – | 3700 | 5000 |
| 39 | " | Cu-Ac.Ac.(0,005) | 3700 | 4300 |

SBA = Styrol/Butadien/Acrylat-Terpolymer
PVC = Polyvinylchlorid
SBS = Styrol/Butadien/Styrol-Terpolymer
ABS = Acryl/Butadien/Styrol-Terpolymer
Cu-Ac.Ac. = Cu(II)acetylacetonat
Co-Naph. = Co-Naphthenat, 8%ige Lösung
V-Ac.Ac. = Vanadylacetylacetonat

In der Tabelle III werden für die Beispiele 6-39 von Klebungen mit dem Acrylatharz A die Zugfestigkeitswerte nach der Härtung bei Raumtemperatur während 45 Minuten und während 24 Stunden angegeben, wobei sowohl ein frisch hergestellter Härter (HA) und ein Härter nach Lagerung während 7 Tagen bei 60°C (HB) verwendet werden. Verklebt werden entfettete Aluminiumbleche.

6

Tabelle III

| Beisp. | Zugscherfestigkeit in N/mm$^2$ | | | |
| --- | --- | --- | --- | --- |
| | Härtung bei RT, 45 Minuten | | Härtung bei RT, 24 Stunden | |
| | HA | HB | HA | HB |
| 6 | dela | dela | 12 | 16 |
| 7 | 6 | 14 | 12 | 16 |
| 8 | 1 | 1 | 12 | 15 |
| 9 | 1 | 1 | 14 | 12 |
| 10 | dela | dela | 6 | 6 |
| 11 | 6 | 8 | 14 | 15 |
| 12 | dela | 1 | 2 | 9 |
| 13 | 1 | 1 | 10 | 4 |
| 14 | 1 | 1 | 24 | 27 |
| 15 | 23 | 23 | 21 | 32 |
| 16 | 2 | 1 | 25 | 29 |
| 17 | 4 | 9 | 27  23 | |
| 18 | 1 | 1 | 22 | 22 |
| 19 | 13 | 23 | 22 | 30 |
| 20 | 5 | 3 | 23 | 26 |
| 21 | 4 | 7 | 22 | 20 |
| 22 | 1 | 1 | 8 | 9 |
| 23 | 4 | 7 | 8 | 11 |
| 24 | 2 | 2 | 7 | 12 |
| 25 | 3 | 4 | 11 | 8 |
| 26 | 1 | 1 | 18 | 16 |
| 27 | 1 | 1 | 3 | 3 |
| 28 | 1 | 2 | 21 | 19 |
| 29 | 1 | 1 | 23 | 20 |
| 30 | dela | dela | 4 | 5 |
| 31 | 3 | 5 | 7 | 9 |
| 32 | 1 | 1 | 5 | 10 |

0 093 085

Tabelle III (Fortsetzung

| Beisp. | Zugscherfestigkeit in $N/mm^2$ | | | |
| | Härtung bei RT, 45 Minuten | | Härtung bei RT, 24 Stunden | |
| | HA | HB | HA | HB |
|---|---|---|---|---|
| 33 | 3 | 3 | 11 | 5 |
| 34 | dela | dela | 8 | 8 |
| 35 | 8 | 6 | 12 | 13 |
| 36 | 1 | 3 | 9 | 11 |
| 37 | 2 | 3 | 11 | 10 |
| 38 | 7 | 9 | 26 | 26 |
| 39 | 7 | 9 | 8 | 9 |

dela = delaminiert, d.h. keine Haftung.

Aus der Tabelle III wird auch die die Verklebung beschleunigende Wirkung der Metallsalze ersichtlich.

**Patentansprüche**

1. Verfahren zur Herstellung eines lagerfähigen, mit einem Acrylatklebharz mischbaren Härters für reaktive Acrylatklebstoffe, dadurch gekennzeichnet, dass man ein gegebenenfalls mit einem Stabilisator versehenes, olefinische Gruppen aufweisendes polymerisierbares Material, ausgewählt aus der Gruppe bestehend aus Acrylaten, Methacrylaten, Styrol, Chlorstyrol, 2-Chlor-1,3-butadien oder 2,3-Dichlor-1,3-butadien, bei einer Temperatur von 50 bis 100°C mit einem darin löslichen Thermoplast oder Elastomer, ausgewählt aus der Gruppe bestehend aus Polyacetal, Polyacrylat, Polymethacrylat, Polystyrol, Polyamid, Polyvinylchlorid oder einem Copolymer aus Styrol und Acrylat bzw. Methacrylat, aus Styrol und Butadien oder aus Styrol und Isopren, einem Terpolymer aus Styrol, Butadien und aus Acrylnitril, oder bestehend aus Polyurethan, Butylkautschuk oder Butadien-Acrylnitril Copolymer, versetzt, der so gebildeten verdickten Lösung ein flüssiges Aldehyd/Amin Kondensationsprodukt zugibt und die Mischung bei erhöhter Temperatur homogenisiert.

2. Verfahren gemäss Anspruch 1, dadurch gekennzeichnet, dass man die verdickte Lösung vor dem Zusatz des Aldehyd/Amin-Kondensationsproduktes abkühlt.

3. Verfahren gemäss Anspruch 1, dadurch gekennzeichnet, dass man die Homogenisation bei einer Temperatur von 60 bis 100°C durchführt.

4. Verfahren gemäss einem der Ansprüche 1 bis 3, dadurch gekennzeichnet, dass man dem Gemisch als Härtungsbeschleuniger eine Komplexverbindung eines Uebergangsmetalls in einer Menge von 0,0005 bis 1,0 Gew.%, bezogen auf den Gesamthärter, zufügt.

5. Verfahren gemäss Anspruch 1, dadurch gekennzeichnet, dass man als polymerisierbares Monomer Methyl-, Aethyl- oder Butylmethacrylat oder Methacrylsäure-2-äthoxy-äthylester verwendet.

6. Verfahren gemäss einem oder mehreren der Ansprüche 1 bis 5, dadurch gekennzeichnet, dass man als Thermoplast ein Polyacetal, Polyacrylat, Polymethacrylat, Polystyrol, Polyamid oder ein Copolymer aus Styrol und Acrylat bzw. Methacrylat, Styrol und Butadien oder Styrol und Isopren in einer Menge von 5 bis 95 Gew.%, bezogen auf den Härter, verwendet.

7. Verfahren gemäss einem oder mehreren Ansprüchen 1 bis 5, dadurch gekennzeichnet, dass man als Elastomer ein Polyurethan, Butylkautschuk oder ein Butadien/Acrylnitril-Copolymer in einer Menge von 5 bis 85 Gew.%, bezogen auf den Härter, verwendet.

8. Verfahren gemäss einem oder mehreren der Ansprüche 1 bis 7, dadurch gekennzeichnet, dass als flüssiges Aldehyd/Amin-Kondensations-Produkt ein solches aus Anilin und Butyraldehyd verwendet wird.

9. Verfahren gemäss einem oder mehreren der Ansprüche 1 bis 8, dadurch gekennzeichnet, dass man dem polymerisierbaren Monomer ein Chinon als Stabilisator zufügt.

10. Ein gemäss einem oder mehreren der Ansprüche 1 bis 9 hergestellter Härter für reaktive Acrylatklebstoffe.

8

11. Härter gemäss Anspruch 10, dadurch gekennzeichnet, dass er, bezogen auf die Gesamthärtermenge, 10 bis 90 Gew.% des polymerisierbaren Polymers, 5 bis 25 Gew.% des Aldehyd/Amin-Kondensats, 5 bis 85 Gew.% des Thermoplasts oder Elastomers, gegebenenfalls 0,0005% bis 1,0 Gew.% einer Komplexverbindung eines Uebergangsmetalls und gegebenenfalls 0,005 bis 0,5 Gew.% eines Stabilisators enthält.

12. Verwendung eines Härters gemäss Anspruch 10 oder 11 in einer ein reaktives Acrylatklebharz enthaltenden Mischung, wobei das Mengenverhältnis von Acrylatklebharz zum Härter zwischen 2:1 und 1:2 liegt.

## Revendications

1.- Procédé de préparation d'un durcisseur pour colles acryliques réactives qui se conserve bien et qui est miscible avec une résine acrylique adhésive, procédé caractérisé en ce qu'on ajoute à une matière polymérisable contenant des radicaux éthyléniques et éventuellement additionnée d'un stabilisant, choisie dans l'ensemble constitué par les acrylates, les méthacrylates, le styrène, le chlorostyrène, le chloro-2 butadiène-1,3 et le dichloro-2,3 buta-diène-1,3, à une température comprise entre 50 et 100°C, une matière thermoplastique ou un élastomère, soluble dans ladite matière polymérisable, pris dans l'ensemble constitué par les polyacétals, les polyacrylates, les polyméthacrylates, le polystyrène, les polyamides, le poly-(chlorure de vinyle), les copolymères styrène/acrylate, styrène/méthacrylate, styrène/butadiène et styrène/isoprène, et le terpolymère styrène/ butadiène/acrylonitrile, ou dans l'ensemble constitué par les polyuréthannes, le caoutchouc butyl et le copolymère butadiène/ acrylonitrile, on ajoute à la solution épaissie ainsi formée un produit liquide résultant de la condensation d'un aldéhyde avec une amine, et on homogénéise le mélange à température élevée.

2.- Procédé selon la revendication 1 caractérisé en ce qu'on refroidit la solution épaissie avant d'ajouter le produit de condensation aldéhyde/amine.

3.- Procédé selon la revendication 1 caractérisé en ce qu'on effectue l'homogénéisation à une température de 60 à 100°C.

4.- Procédé selon l'une quelconque des revendications 1 à 3, caractérisé en ce qu'on ajoute au mélange, comme accélérateur de durcissement, un complexe de métal de transition en une quantité de 0,0005 à 1,0 % en poids par rapport à l'ensemble du durcisseur.

5.- Procédé selon la revendication 1 caractérisé en ce qu'on utilise, comme monomère polymérisable, le méthacrylate de méthyle, d'éthyle, de butyle ou d'éthoxy-2 éthyle.

6.- Procédé selon l'une quelconque des revendications 1 à 5, caractérisé en ce qu'on utilise, comme matière thermoplastique, un polyacétal, un polyacrylate, un polyméthacrylate, le polystyrène, un polyamide ou un copolymère styrène/acrylate, styrène/méthacrylate, styrène/ butadiène ou styrène/isoprène, en une quantité de 5 à 95 % en poids par rapport au durcisseur.

7.- Procédé selon l'une quelconque des revendications 1 à 5, caractérisé en ce qu'on utilise, comme élastomère, un polyuréthanne, un caoutchouc butyl ou un copolymère butadiène/acrylonitrile, en une quantité de 5 à 85 % en poids par rapport au durcisseur.

8.- Procédé selon l'une quelconque des revendications 1 à 7, caractérisé en ce qu'on utilise, comme produit liquide résultant de la condensation d'un aldéhyde avec une amine, un produit de ce genre dérivant de l'aniline et du butyraldéhyde.

9.- Procédé selon l'une quelconque des revendications 1 à 8, caractérisé en ce qu'on ajoute au monomère polymérisable, comme stabilisant, une quinone.

10.- Durcisseur pour colles acryliques réactives qui a été préparé selon l'une quelconque des revendications 1 à 9

11.- Ourcisseur selon la revendication 10 caractérisé en ce qu'il contient, par rapport à la quantité totale du durcisseur, de 10 à 90 % en poids du monomère polymérisable, de 5 à 25 % en poids du condensat aldéhyde/amine, de 5 à 85 % en poids de la matière thermoplastique ou de l'élastomère, éventuellement de 0,0005 % à 1,0 % en poids d'un complexe d'un métal de transition et, éventuellement, de 0,005 à 0,5 % en poids d'un stabilisant.

12.- Application d'un durcisseur selon l'une des revendications 10 et 11 dans un mélange contenant une résine adhésive réactive à base d'acrylates, le rapport entre la quantité de la résine acrylique adhésive et le durcisseur étant compris entre 2:1 et 1:2.

## Claims

1. A process for the preparation of a storage-stable curing agent for reactive acrylate adhesives, which curing agent is miscible with an acrylate resin adhesive, which process comprises adding to a polymerisable material containing olefinic groups and optionally provided with a stabiliser, which material is selected from the group consisting of acrylates, methacrylates, styrene, chlorostyrene, 2-chloro-1,3-butadiene or 2,3-dichloro-1,3-butadiene, at a temperature in the range from 50° to 100°C, a thermoplast or elastomer each soluble in said polymerisable material, which thermoplast or elastomer is selected from the group consisting of polyacetals, polyacrylates, polymethacrylates, polystyrene, polyamides, polyvinyl chloride, or copolymers of styrene with acrylates or methacrylates, of styrene with butadiene or of styrene with isoprene, styrene/butadiene/acrylonitrile terpolymers, or consisting of polyurethanes, butyl rubber or butadiene/ acrylonitrile copolymers; introducing

9

into the thickened solution thus formed a liquid aldehyde/amine condensation product; and homogenising the solution at elevated temperature.

2. A process according to claim 1, wherein the thickened solution is cooled before the addition of the aldehyde/ amine condensation product.

3. A process according to claim 1, wherein homogenisation is performed at a temperature in the range from 60° to 100°C.

4. A process according any one of claims 1 to 3, wherein a complex compound of a transition metal is added, as a curing accelerator, to the mixture, the amount added being 0.0005 to 1.0 % by weight, based on the total amount of curing agent.

5. A process according to claim 1, wherein the polymerisable monomer is methyl methacrylate, ethyl methacrylate, butyl methacrylate or 2-ethoxyethyl methacrylate.

6. A process according to one or more of claims 1 to 5, wherein the thermoplast is a polyacetal, polyacrylate, polymethacrylate, polystyrene or polyamide, or a copolymer of styrene with acrylate or methacrylate, of styrene with butadiene or of styrene with isoprene, in an amount of 5 to 95 % by weight, based on the amount of curing agent.

7. A process according to one or more of claims 1 to 5, wherein the elastomer is a polyurethane, butyl rubber or a butadiene/acrylonitrile copolymer, in an amount of 5 to 85 % by weight, based on the amount of curing agent.

8. A process according to one or more of claims 1 to 7, wherein the liquid aldehyde/amine condensation product is one formed from aniline and butyraldehyde.

9. A process according to one or more of claims 1 to 8, wherein there is added to the polymerisable monomer a quinone as stabiliser.

10. A curing agent for reactive acrylate adhesives, which curing agent is prepared according to one or more of claims 1 to 9.

11. A curing agent according to claim 10, which contains, based on its total amount, 10 to 90 % by weight of the polymerisable polymer, 5 to 25 % by weight of the aldehyde/ amine condensation product, 5 to 85 % by weight of the thermoplast or elastomer, optionally 0.0005 % to 1.0 % by weight of a complex compound of a transition metal, and optionally 0.005 to 0.5 % by weight of a stabiliser.

12. Use of a curing agent according to either of claims 10 or 11 in a mixture containing a reactive acrylate resin adhesive, the quantity ratio of acrylate resin adhesive to the curing agent being in the range from 2:1 to 1:2.